Europäisches Patentamt

(19) European Patent Office

Office européen des brevets

(11) **EP 0 762 737 A2**

(12) **EUROPEAN PATENT APPLICATION**

(43) Date of publication:
12.03.1997 Bulletin 1997/11

(51) Int. Cl.$^6$: **H04N 5/14**

(21) Application number: 96113473.1

(22) Date of filing: 22.08.1996

(84) Designated Contracting States:
DE FR GB IT NL

(30) Priority: 24.08.1995 US 2757

(71) Applicant: TEXAS INSTRUMENTS
INCORPORATED
Dallas Texas 75265 (US)

(72) Inventors:
• Clatanoff, Todd A.,
Allen, TX 75013 (US)

• Markandey, Vishal
Dallas, TX 75209 (US)
• Ohara, Kazuhiro
Plano, TX 75023 (US)

(74) Representative: Schwepfinger, Karl-Heinz, Dipl.-
Ing.
Prinz & Partner,
Manzingerweg 7
81241 München (DE)

(54) **Improvements in display systems**

(57)     A processing system (10) for video data. The system uses two scan line video processors. The first processor (12) performs a first set of predetermined tasks. The second processor (20) performs a second set of predetermined tasks. The division of tasks between the two processors (12,20) allow optimal utilization of the processors' limited instruction space, any combination of processing tasks is allowed, so long as one of the processors works at near full instruction capacity.

FIG. 1

EP 0 762 737 A2

**Description**

FIELD OF THE INVENTION

This invention relates to display systems, more particularly to display systems that use digital processing on video data.

BACKGROUND OF THE INVENTION

The advent of spatial light modulators has moved display technology towards processing the data digitally, regardless of how it is displayed. There are several methods of display that use digital data directly. One such example of these technologies is spatial light modulators.

Digital spatial light modulators typically constitute an array of individual elements each of which are individually addressable to change states between an "ON" state and an "OFF" state. These elements normally correspond to one pixel on the final displayed image. The brightness of each pixel in the image is controlled by the amount of time the element is in the "ON" state. In analog modulators, the brightness of each pixel is controlled by the voltage applied to the modulator elements.

Three main problems result from this type of system. First, the nature of the display in the majority of these modulators is frame oriented, moving away from the rasterized, interlaced display of the cathode ray tube (CRT). The incoming data must be translated from interlace to progressive scan. Second, different formats of television, such as NTSC, PAL, etc. require different dimensions of the image. The pixel-to-element relationship makes the translation between formats difficult. Third, the larger, brighter displays achieved by these SLMs can highlight limitations of the data or processing, and require additional compensation such as sharpness enhancement. This requires instructions that allow the processor to operate on all of this data.

Several solutions have been suggested, including those with scan-line video processors (hereinafter referred to as SVP).

The problem with previous embodiments is that they either waste instruction space, or they do not allow full functionality. Therefore, a solution to the above problems that more efficiently utilizes the instruction space of the SVP is needed.

SUMMARY OF THE INVENTION

One aspect of the invention is the allocation of processing tasks between two scan line video processors to make the most efficient use of their instruction spaces. A first processor performs tasks of motion detection and motion adaptive progressive scan conversion on a video input signal. A second processor performs any scaling necessary and applies sharpness control to the data.

It is an advantage of the invention in that it makes efficient use of the available processor instruction space.

It is a further advantage of the invention in that it allows the data to be scaled vertically to adapt the data to differently sized spatial light modulators.

BRIEF DESCRIPTION OF THE DRAWINGS

For a more complete understanding of the present invention and for further advantages thereof, reference is now made to the following Detailed Description taken in conjunction with the accompanying Drawings in which:

Figure 1 shows an overall block diagram of one embodiment of a processing system in accordance with the invention that efficiently use SVP instruction system;

Figure 2 shows a block diagram of a motion adaptive progressive scan process performed by the system of Figure 1;

Figure 3 shows a graphical representation of bilinear interpolation performed by the system of Figure 1; and

Figure 4 shows a graphical representation of cubic interpolation performed by the system of Figure 1.

DETAILED DESCRIPTION OF THE PREFERRED EMBODIMENTS

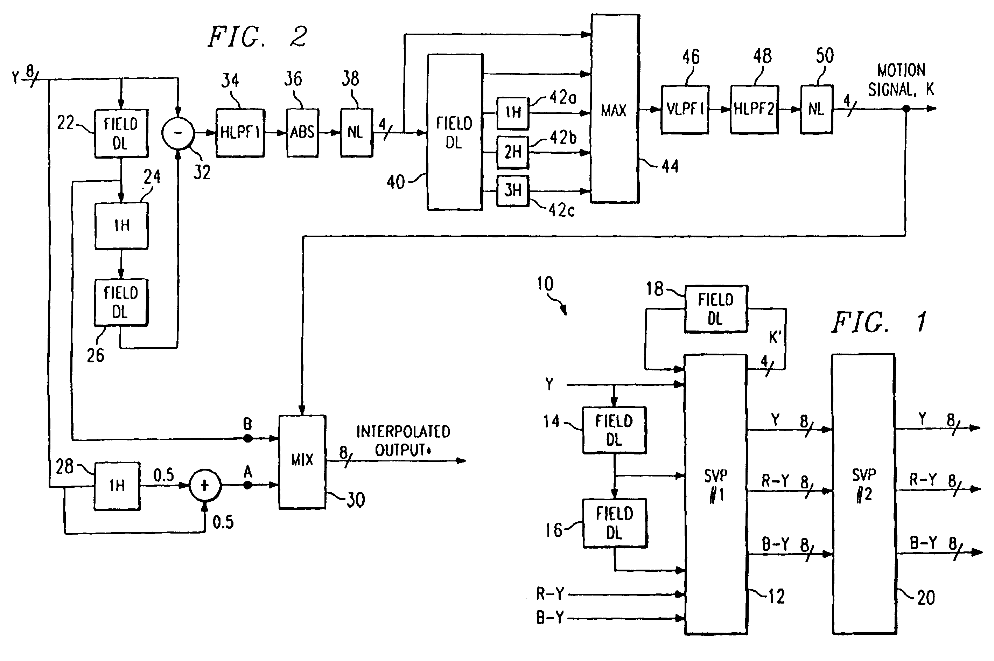

Figure 1 shows the overall architecture of a processing system 10 for digital video data. The incoming data is assumed to be interlaced data, two fields per frame, with the odd-numbered lines in the first field and the even numbered lines in the second. In order to interpolate the data for the current field, this system uses three fields. The incoming field at Y will be referred to as field 2. Field DL 14, which is a field delay, produces the most previous field of field 2, which will be referred to as field 1. The lines of data in field 1 and field 2 are offset by one. They could be from the same frame or from adjacent frames of data.

Field DL 16 produces field 0, the next most previous field. Fields 2 and 0 have the same line numbers in them, either the odd-numbered or even-number lines from two adjacent frames. All three fields are input to SVP#1 12, which is a scan-line video processor. Additionally, the SVP receives the chrominance signals R-Y and B-Y.

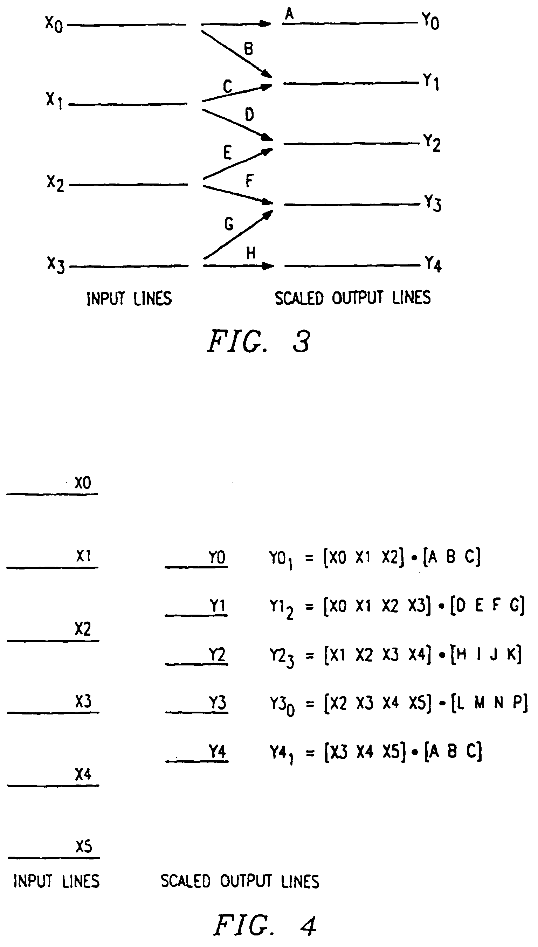

SVP#1's instruction space will be used to perform motion detection and motion adaptive progressive scan interpolation. The motion adaptive progressive scan interpolation process involving field DL 18 is discussed with reference to Figure 2. The interpolated outputs Y, R-Y and B-Y are then sent to SVP#2, 20. SVP#2 performs vertical scaling and applies sharpness control. The processes for vertical scaling are shown in Figures 3 and 4.

The motion adaptive progressive scan interpolation is shown in Figure 2. The mixing circuit 30 uses data from the following lines of data, where field 3 is the incoming field: the most previous field, field 2, from the field DL 22; the adjacent line in the next most previous field, field 1, from horizontal DL 24 and field DL 26; and the motion signal k, from the top data path. The top data path initially uses a comparison between the incoming signal Y, field 3, and the adjacent line from field 1, which has like-numbered lines. An arithmetic or other circuit finds the difference between these at 32.

The resulting difference is passed through a horizontal, lowpass filter HLPF1 at 34, and the absolute value is found at ABS 36. A non-linear function NL 38 is applied. The nonlinear function performs thresholding to eliminate small difference signal values due to noise. It also reduces the resolution of the difference signal to 4 bits. A comparator 44 determines the maximum of several values: data from field 0, out of field DL 40; data from the adjacent lines to the line undergoing processing, out of horizontal delays 42a, 42b, and 42c; and the resulting 4-bit signal from the nonlinear function 32.

This maximum value is then filtered both vertically and horizontally at VLPF1 46 and HLPF2 48, respectively. The nonlinear function 50 is similar to that of 38 in that it reduces signal noise. The resulting motion signal, k, is then passed to the mixing circuit 30 and used to determine the first interpolated output. Referring back to Figure 1, the interpolated signal, as well as the color difference signals R-Y and B-Y are sent to SVP#2. The progressive scan process is discussed in more detail in Copending European Patent Application No 96106768.3.

SVP#2 will perform vertical scaling to allow the data to be formatted for whatever dimensions are desired. The dimensions of an image typically depend upon what the broadcast format is. Common scaling functions are 3:4 and 5:6, where 4 lines of data create 5 lines, or 5 lines create 6. There are two primary methods of accomplishing this, bilinear interpolation, or cubic.

Figure 3 shows a graphical representation of bilinear vertical scaling for 3:4. The output lines $Y_0$ - $Y_4$ are combinations of the data from lines $X_0$ - $X_3$. For 5:6 vertical scaling, there would be an extra line on each. The relationships between the lines are:

$$Y_0 = AX_0 \quad Y_1 = BX_0 + CX_1 \quad Y_2 = DX_1 + EX_2 \quad Y_3 = FX_2 + GX_3$$

$$Y_4 = AX_3$$

It can be seen from above that at $Y_4$, the relationships begin to repeat, as do the coefficients A-G. For 5:6 scaling, the relationships are the same, except that $Y_4 = HX_3 + IX_4$, $Y_5 = JX_4 + KX_5$, and $Y_6 = AX_5$.

This processing system with these scaling capabilities are ideal for use with spatial light modulator arrays. If the devices had dimensions of 848 rows by 600 columns of elements, 4:5 vertical scaling would be used to convert the incoming 480 rows of data (for standard NTSC and PAL inputs) to 600 rows of actual display data. The typical input standard is 640 pixels per row by 480 rows. If the device had dimensions of 864 by 576, the scaling factors of 5:6 would allow the incoming 480 rows to be scaled to allow 576 lines of display.

The coefficients are shown in the following table:

| Coefficient | 3:4 Scaling Coefficient | 5:6 Scaling Coefficient |
|---|---|---|
| A | 1.0 | 1.0 |
| B | 0.25 | 0.1666666667 |
| C | 0.75 | 0.83333333333 |
| D | 0.5 | 0.3333333333 |
| E | 0.5 | 0.6666666667 |
| F | 0.75 | 0.5000000000 |
| G | 0.25 | 0.50000000000 |
| H | 1.0 | 0.6666666667 |
| I | --- | 0.3333333333 |
| J | --- | 0.8333333333 |
| K | --- | 0.1666666667 |

3:4 cubic scaling is shown graphically in Figure 4. The relationships are shown below:

$$Y_0 = AX_0 + BX_1 + CX_2 \qquad Y_1 = DX_0 + EX_1 + FX_2 + GX_3$$

$$Y_2 = HX_1 + IX_2 + JX_3 + KX_4 \qquad Y_3 = LX_2 + MX_3 + NX_4 + PX_5$$

$$Y_4 = AX_3 + BX_4 + CX_5$$

For 5:6 scaling, the same relationships exist, except that:

$$Y_4 = QX_3 + RX_4 + SX_5 + TX_6 \qquad Y_5 = UX_4 + VX_5 + WX_6 + YX_7,$$

$$\text{and } Y_6 = AX_5 + BX_6 + CX_7,$$

with the values of the coefficients shown below.

| Coefficient | 3:4 Cubic Scaling | 5:6 Cubic Scaling |
| --- | --- | --- |
| A | 0.0555555556 | 0.0555555556 |
| B | 0.8888888889 | 0.8888888889 |
| C | 0.0555555556 | 0.5555555556 |
| D | -0.0147569444 | -0.0074588477 |
| E | 0.2560763888 | 0.1751543210 |
| F | 0.7821180555 | 0.8387345679 |
| G | -0.02343750 | 0.0064300412 |
| H | -0.03472222 | -0.0226337449 |
| I | 0.53472222 | 0.3456790124 |
| J | 0.53472222 | 0.7098765432 |
| K | -0.03472222 | 0.0329218107 |
| L | -0.02343750 | -0.0347222222 |
| M | 0.7821180555 | 0.5347222222 |
| N | 0.2560763888 | 0.5347222222 |
| P | -0.0147569444 | 0.0347222222 |
| Q | --- | -0.039218107 |
| R | --- | 0.7098765432 |
| S | --- | 0.346790124 |
| T | --- | -0.0226337449 |
| U | --- | 0.006430041 |
| V | --- | 0.8387345679 |
| W | --- | 0.1751543210 |
| Y | --- | 0.0074588477 |

Other supported formats by these devices would be SVGA and VGA, as are typically used in computer displays. SVP#2 will also perform sharpness and chroma proscan (line-averaging).

At this point in the processing of the data, this technique would be applied. In short, the sharpness control operates on the data to increase the clarity of edges in the picture. Most progressive scan and motion detection involve lowpass or bandpass filtering functions. This can lead to a loss of vertical resolution. By using two-dimensional filtering with other measures, some of this resolution can be regained. When all of the processing is accomplished, the interpolated output Y, R-Y and B-Y are passed to the memory of the display system for storage until they are needed for display.

One major advantage of this architecture is its efficient use of the SVP instruction space. While SVPs have several advantages, their instruction space is limited to 442 instructions per processor. This number of instructions assumes a 32 MHz system. Using the two processors above and dividing up their tasks such that motion detection and motion adaptive proscan is performed in SVP#1 and vertical scaling and sharpness control is performed in SVP#2, overall efficiency of instruction space is maintained. Other combinations of instructions could be used, the only requirement being that the set of instructions in SVP#1 are chosen such that SVP#2 is left with some left over instruction space. This avoids the use of an extra processor.

As an example, using the processes described above, SVP#1 would contain 290 instructions out of a possible 442, for a utilization of 65.6%. SVP#2 would contain 428 instructions, for a utilization of 96.8%. The overall system utilization is 81.22%. The efficient use of these spaces prevents the need for additional processors which can increase system cost. Running SVP#2 at less than its full capacity also prevents any problems with bottlenecks in the second processor.

Thus, although there has been described to this point particular embodiments of a system architecture for processing video display data, it is not intended that such specific references be considered as limitations upon the scope of this invention.

**Claims**

1. A system operable to process video data, comprising:

   a video input signal;
   a first scan-line video processor, wherein said first processor performs a first predetermined set of tasks so as to contain a number of instructions substantially equal to the maximum number of instructions allowed; and
   a second scan-line video processor, wherein said second processor receives on output from tasks performed by said first processor and performs a second predetermined set of tasks, such that no further processors are required.

2. The system as in Claim 1, wherein said system is operable to process video data for a spatial light modulator array.

3. The system as in Claim 2, wherein said spatial light modulator array has the dimensions of 848 rows by 600 columns.

4. The system as in Claim 2, wherein said spatial light modulator array has the dimensions of 864 rows by 576 columns.

5. The system as in Claim 2 or Claim 3, wherein said task of vertical scaling is accomplished by 4:5 bilinear interpolation.

6. The system as in Claim 2 or Claim 4, wherein said task of vertical scaling is accomplished by 5:6 bilinear interpolation.

7. The system as in Claim 2 or Claim 3, wherein said task of vertical scaling is accomplished by 4:5 cubic interpolation.

8. The system as in Claim 2 or Claim 4, wherein said task of vertical scaling is accomplished by 5:6 cubic interpolation.

9. The system as in any preceding claim, wherein said first set of predetermined tasks includes the tasks of motion detection and motion adaptive proscan.

10. The system as in any preceding claim, wherein said second set of predetermined tasks includes sharpness control, vertical scaling and chroma proscan.

FIG. 2

FIG. 1

MOTION SIGNAL, K

INTERPOLATED OUTPUT

EP 0 762 737 A2

$X_0$ ——————————→ A ———————— $Y_0$

B

$X_1$ —————————— C ———————— $Y_1$

D

E

$X_2$ —————————— F ———————— $Y_2$

———————— $Y_3$

G

$X_3$ —————————— H ———————— $Y_4$

INPUT LINES                    SCALED OUTPUT LINES

## FIG. 3

———— X0

———— X1          ———— Y0     $Y0_1 = [X0\ X1\ X2] \cdot [A\ B\ C]$

                 ———— Y1     $Y1_2 = [X0\ X1\ X2\ X3] \cdot [D\ E\ F\ G]$

———— X2          ———— Y2     $Y2_3 = [X1\ X2\ X3\ X4] \cdot [H\ I\ J\ K]$

———— X3          ———— Y3     $Y3_0 = [X2\ X3\ X4\ X5] \cdot [L\ M\ N\ P]$

                 ———— Y4     $Y4_1 = [X3\ X4\ X5] \cdot [A\ B\ C]$

———— X4

———— X5

INPUT LINES      SCALED OUTPUT LINES

## FIG. 4